(19) **Europäisches Patentamt / European Patent Office / Office européen des brevets**

(11) **EP 4 444 587 B1**

(12) **FASCICULE DE BREVET EUROPEEN**

(45) Date de publication et mention de la délivrance du brevet:
**24.12.2025 Bulletin 2025/52**

(21) Numéro de dépôt: **22834673.0**

(22) Date de dépôt: **04.11.2022**

(51) Classification Internationale des Brevets (IPC):
**B60W 30/095** *(2012.01)*   **B60W 30/14** *(2006.01)*
**B60K 31/00** *(2006.01)*   **B60W 30/16** *(2020.01)*

(52) Classification Coopérative des Brevets (CPC):
**B60W 30/0956; B60W 30/16;** B60K 2031/0033;
B60W 2554/4042; B60W 2554/80; B60W 2554/802;
B60W 2554/804

(86) Numéro de dépôt international:
**PCT/FR2022/052086**

(87) Numéro de publication internationale:
**WO 2023/105131 (15.06.2023 Gazette 2023/24)**

(54) **PROCÉDÉ ET DISPOSITIF DE CONTRÔLE D'UN SYSTÈME DE RÉGULATION ADAPTATIVE DE VITESSE D'UN VÉHICULE**

VERFAHREN UND VORRICHTUNG ZUR STEUERUNG EINES SYSTEMS ZUR ADAPTIVEN GESCHWINDIGKEITSREGELUNG EINES FAHRZEUGS

METHOD AND DEVICE FOR CONTROLLING A VEHICLE'S ADAPTIVE CRUISE CONTROL SYSTEM

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **07.12.2021 FR 2113092**

(43) Date de publication de la demande:
**16.10.2024 Bulletin 2024/42**

(73) Titulaire: **Stellantis Auto SAS 78300 Poissy (FR)**

(72) Inventeur: **VIVET, Luc 75016 PARIS 16 (FR)**

(74) Mandataire: **ESIP Stellantis Auto SAS Service REIP - YT800 43, rue Jean Pierre Timbaud 78300 Poissy (FR)**

(56) Documents cités:
**US-A1- 2019 061 756     US-A1- 2021 009 113**

**Description**

**Domaine technique**

La présente invention concerne les procédés et dispositifs de contrôle d'un système de régulation adaptative de vitesse d'un véhicule, notamment un véhicule automobile. La présente invention concerne également un procédé et un dispositif de régulation de vitesse d'un véhicule. La présente invention concerne également un procédé et un dispositif de contrôle d'un véhicule, notamment un véhicule autonome.

**Arrière-plan technologique**

Certains véhicules contemporains sont équipés de fonctions ou système(s) ou d'aide à la conduite, dit ADAS (de l'anglais « Advanced Driver-Assistance System » ou en français « Système d'aide à la conduite avancé »).

Parmi ces systèmes, le système de régulation adaptative de vitesse, dit ACC (de l'anglais « Adaptive Cruise Control ») a pour fonction première la régulation automatiquement, de façon adaptative, de la vitesse des véhicules qui en sont équipés en fonction de leur environnement. Un tel système ACC détermine une ou plusieurs consignes d'accélération en fonction d'une consigne de vitesse et d'informations relatives à l'environnement du véhicule, la ou les consignes d'accélération étant propres à réguler la vitesse du véhicule de façon adaptative, c'est-à-dire en tenant compte de l'environnement du véhicule.

Ces informations d'environnement correspondent par exemple à la distance entre le véhicule équipé du système ACC et un véhicule circulant devant, à la vitesse (par exemple relative) du véhicule circulant devant, à l'accélération (ou à la décélération) du véhicule circulant devant et/ou à une vitesse limite réglementaire. Un tel véhicule est appelé véhicule cible ou objet cible du système ACC. La ou les consignes d'accélération sont par exemple déterminées à partir d'une loi de commande basée sur des estimations du couple fourni par un groupe motopropulseur (par exemple un moteur thermique ou électrique) à une ou plusieurs roues du véhicule et de l'accélération courante du véhicule. Une valeur courante est entendue comme étant une valeur à l'instant courant (l'instant actuel, la dernière valeur connue), une valeur étant une position, une vitesse, une accélération ...

Les informations d'environnement d'un véhicule sont par exemple obtenues de capteurs embarqués dans le véhicule, tels que des radars par exemple. Ces informations sont particulièrement importantes pour un véhicule, par exemple pour améliorer la sécurité du véhicule en prenant en compte l'environnement qui l'entoure, notamment les autres véhicules.

Le confort des passagers d'un véhicule est un autre facteur important, notamment pour l'acceptation des systèmes d'aide à la conduite des véhicules. Par exemple, une accélération ou une décélération trop importante est une cause d'inconfort pour les passagers d'un véhicule, notamment lorsque l'accélération est contrôlée par un système ACC. Des accélérations ou décélérations importantes et/ou répétées sont parfois dues à un manque d'anticipation du comportement du véhicule cible par le système ACC.

En outre l'état de la technique est connu du document US2019061756A1, correspondant au préambule de la revendication 1.

**Résumé de la présente invention**

Un objet de la présente invention est de résoudre au moins l'un des problèmes de l'arrière-plan technologique décrit précédemment.

Un autre objet de la présente invention est d'améliorer le fonctionnement d'un système ACC d'un véhicule.

Selon un premier aspect, la présente invention concerne un procédé de contrôle d'un système de régulation adaptative de vitesse, dit système ACC, d'un premier véhicule suivant un deuxième véhicule correspondant à un véhicule cible du système ACC, le procédé comprenant les étapes suivantes :

- détermination de premières données représentatives de décélération du deuxième véhicule et de deuxièmes données représentatives de vitesse du deuxième véhicule ;
- détermination de troisièmes données représentatives d'une durée selon une fonction déterminée des premières données ;
- détermination de quatrièmes données représentatives de vitesse ajustée du deuxième véhicule en fonction des premières données, des deuxièmes données et des troisièmes données ;
- contrôle du système ACC en fonction des quatrièmes données,

caractérisé en ce que les premières données comprennent une valeur de décélération courante dudit deuxième véhicule, les deuxièmes données comprennent une valeur de vitesse courante dudit deuxième véhicule, les quatrièmes données comprennent une valeur de vitesse ajustée courante dudit deuxième véhicule, la vitesse ajustée courante du deuxième véhicule correspond au maximum entre une première vitesse déterminée et une deuxième vitesse correspondant à une somme de la vitesse courante du deuxième véhicule et d'un produit de la décélération courante du deuxième véhicule par la durée.

Le contrôle du système ACC en fonction d'une valeur ajustée du deuxième véhicule, correspondant au véhicule cible du système ACC, qui dépend de la décélération du deuxième véhicule permet au premier véhicule d'anticiper le freinage du deuxième véhicule. Le fonctionnement du système ACC s'en trouve amélioré lorsque le deuxième véhicule décélère, la décélération du premier véhicule étant par exemple plus rapide et plus forte par rapport à celle obtenue par un système ACC de l'art antérieur.

Selon une autre variante, la première vitesse déterminée est égale à 1 m/s.

Selon une variante supplémentaire, la durée est égale à 0 pour toute valeur de décélération du deuxième véhicule comprise entre 0 et une valeur dite minimale de décélération, la durée est suivant une fonction croissante de la décélération du deuxième véhicule lorsque l'décélération est comprise entre la valeur minimale et une valeur dite maximale de décélération et la durée est égale à une valeur maximale de durée pour toute valeur de décélération supérieure à la valeur maximale de décélération.

Selon encore une variante, ladite valeur maximale de durée déterminée est égale à 500 ms, ladite valeur minimale de décélération est égale à -2 m/s$^2$ et ladite valeur maximale de décélération est égale à -5 m/s$^2$.

Selon une variante additionnelle, le contrôle du système ACC comprend un ajustement d'une valeur de temps inter-véhicules de consigne en fonction de la vitesse ajustée du deuxième véhicule.

Selon un deuxième aspect, la présente invention concerne un dispositif de contrôle d'un système de régulation adaptative de vitesse de véhicule, le dispositif comprenant une mémoire associée à un processeur configuré pour la mise en œuvre des étapes du procédé selon le premier aspect de la présente invention.

Selon un troisième aspect, la présente invention concerne un véhicule, par exemple de type automobile, comprenant un dispositif tel que décrit ci-dessus selon le deuxième aspect de la présente invention.

Selon un quatrième aspect, la présente invention concerne un programme d'ordinateur qui comporte des instructions adaptées pour l'exécution des étapes du procédé selon le premier aspect de la présente invention, ceci notamment lorsque le programme d'ordinateur est exécuté par au moins un processeur.

Un tel programme d'ordinateur peut utiliser n'importe quel langage de programmation, et être sous la forme d'un code source, d'un code objet, ou d'un code intermédiaire entre un code source et un code objet, tel que dans une forme partiellement compilée, ou dans n'importe quelle autre forme souhaitable.

Selon un cinquième aspect, la présente invention concerne un support d'enregistrement lisible par un ordinateur sur lequel est enregistré un programme d'ordinateur comprenant des instructions pour l'exécution des étapes du procédé selon le premier aspect de la présente invention.

D'une part, le support d'enregistrement peut être n'importe quel entité ou dispositif capable de stocker le programme. Par exemple, le support peut comporter un moyen de stockage, tel qu'une mémoire ROM, un CD-ROM ou une mémoire ROM de type circuit microélectronique, ou encore un moyen d'enregistrement magnétique ou un disque dur.

D'autre part, ce support d'enregistrement peut également être un support transmissible tel qu'un signal électrique ou optique, un tel signal pouvant être acheminé via un câble électrique ou optique, par radio classique ou hertzienne ou par faisceau laser autodirigé ou par d'autres moyens. Le programme d'ordinateur selon la présente invention peut être en particulier téléchargé sur un réseau de type Internet.

Alternativement, le support d'enregistrement peut être un circuit intégré dans lequel le programme d'ordinateur est incorporé, le circuit intégré étant adapté pour exécuter ou pour être utilisé dans l'exécution du procédé en question.

**Brève description des figures**

D'autres caractéristiques et avantages de la présente invention ressortiront de la description des exemples de réalisation particuliers et non limitatifs de la présente invention ci-après, en référence aux figures 1 à 5 annexées, sur lesquelles :

[Fig. 1] illustre schématiquement un premier véhicule suivant un deuxième véhicule, selon un exemple de réalisation particulier et non limitatif de la présente invention ;

[Fig. 2] illustre schématiquement une relation entre un paramètre de durée et une décélération du deuxième véhicule de la figure 1, selon un exemple de réalisation particulier et non limitatif de la présente invention ;

[Fig. 3] illustre schématiquement deux courbes de décélération du premier véhicule de la figure 1 en fonction du temps, selon un exemple de réalisation particulier et non limitatif de la présente invention ;

[Fig. 4] illustre schématiquement un dispositif configuré pour contrôler un système de régulation adaptative de vitesse du premier véhicule de la figure 1, selon un exemple de réalisation particulier et non limitatif de la présente invention ;

[Fig. 5] illustre un organigramme des différentes étapes d'un procédé de contrôle d'un système de régulation adaptative de vitesse du premier véhicule de la figure 1, selon un exemple de réalisation particulier et non limitatif de la présente invention.

## Description des exemples de réalisation

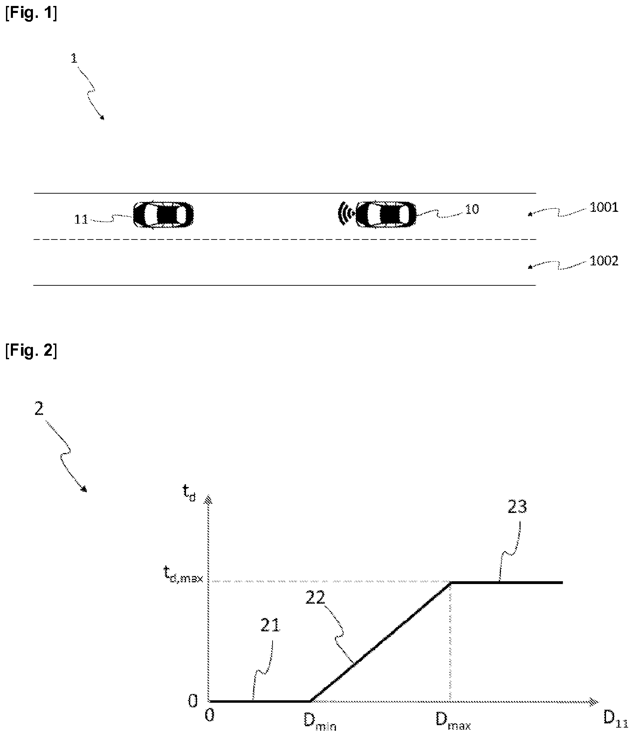

Un procédé et un dispositif de contrôle d'un système de régulation adaptative de vitesse d'un véhicule vont maintenant être décrits dans ce qui va suivre en référence conjointement aux figures 1 à 5. Des mêmes éléments sont identifiés avec des mêmes signes de référence tout au long de la description qui va suivre.

Selon un exemple particulier et non limitatif de réalisation de la présente invention, le contrôle d'un système de régulation adaptative de vitesse, dit système ACC, d'un premier véhicule ayant comme cible un deuxième véhicule circulant devant le premier véhicule, le deuxième véhicule étant dans une phase de décélération, comprend la détermination de premières données représentatives de décélération du deuxième véhicule (par exemple une valeur de décélération courante à un instant courant) et de deuxièmes données représentatives de vitesse du deuxième véhicule (par exemple une valeur de vitesse courante à l'instant courant), par exemple à partir de données reçues de capteurs embarqués dans le premier véhicule. Des troisièmes données représentatives d'une durée sont obtenues ou déterminées selon une fonction déterminée des premières données. Ces troisièmes données de durée sont utilisées avec les premières et deuxièmes données pour déterminer des quatrièmes données représentatives de vitesse ajustée du deuxième véhicule (par exemple une valeur de vitesse ajustée courante à un instant courant, la vitesse ajustée correspondant à un ajustement de la vitesse représentée par les deuxièmes données). Le système ACC du premier véhicule est alors contrôlé en fonction de ces quatrièmes données.

Une telle adaptation de la régulation de la vitesse du premier véhicule lorsque le deuxième véhicule correspondant au véhicule cible du système ACC freine devant le premier véhicule permet d'anticiper la décélération du premier véhicule lorsque cela est nécessaire (par exemple lorsque la décélération est forte) en prenant en compte un paramètre, une durée, qui est fonction de la décélération du deuxième véhicule.

La figure 1 illustre schématiquement un premier véhicule 10 suivant un deuxième véhicule 11 sur une portion de route d'un environnement 1, selon un exemple de réalisation particulier et non limitatif de la présente invention.

La figure 1 illustre un premier véhicule 10, par exemple un véhicule automobile, embarquant un ou plusieurs capteurs configurés pour détecter la présence d'objets dans l'environnement 1 du premier véhicule 10. Selon d'autres exemples, le premier véhicule 10 correspond à un car, un bus, un camion, un véhicule utilitaire ou une motocyclette, c'est-à-dire à un véhicule de type véhicule terrestre motorisé.

Le premier véhicule 10 correspond à un véhicule circulant sous la supervision totale d'un conducteur ou circulant dans un mode autonome ou semi-autonome. Le premier véhicule circule selon un niveau d'autonomie égale à 0 ou selon un niveau d'autonomie allant de 1 à 5 par exemple, selon l'échelle définie par l'agence fédérale américaine qui a établi 5 niveaux d'autonomie allant de 1 à 5, le niveau 0 correspondant à un véhicule n'ayant aucune autonomie, dont la conduite est sous la supervision totale du conducteur, le niveau 1 correspondant à un véhicule avec un niveau d'autonomie minimal, dont la conduite est sous la supervision du conducteur avec une assistance minimale d'un système ADAS, et le niveau 5 correspondant à un véhicule complètement autonome.

Selon l'exemple de la figure 1, le premier véhicule 10 circule sur une portion de route à deux voies de circulations 1001, 1002. Le premier véhicule 10 circule par exemple sur la voie de circulation de droite 1001, les deux voies de circulation 1001 et 1002 étant selon un même sens de circulation.

Selon l'exemple de la figure 1, le premier véhicule 10 suit un deuxième véhicule 11, à une distance déterminée et pouvant varier dans le temps (en fonction du comportement dynamique du premier véhicule 10 et du deuxième véhicule 11), le deuxième véhicule 11 circulant sur la même voie de circulation 1001 que le premier véhicule 10 et dans la même direction que le premier véhicule 10.

Le deuxième véhicule 11 correspond à l'objet cible (aussi appelé véhicule cible) sélectionné par le système ACC du premier véhicule 10.

Le premier véhicule 10 embarque par exemple un ou plusieurs des capteurs suivants :

- un ou plusieurs radars à ondes millimétriques arrangés sur le premier véhicule 10, par exemple à l'avant, à l'arrière, sur chaque coin avant/arrière du véhicule ; chaque radar est adapté pour émettre des ondes électromagnétiques et pour recevoir les échos de ces ondes renvoyées par un ou plusieurs objets (par exemple le deuxième véhicule 11 situé devant le premier véhicule 10 selon l'exemple de la figure 1), dans le but de détecter des obstacles et leurs distances vis-à-vis du premier véhicule 10 ; et/ou
- un ou plusieurs LIDAR(s) (de l'anglais « Light Detection And Ranging », ou « Détection et estimation de la distance par la lumière » en français), un capteur LIDAR correspondant à un système optoélectronique composé d'un dispositif émetteur laser, d'un dispositif récepteur comprenant un collecteur de lumière (pour collecter la partie du rayonnement lumineux émis par l'émetteur et réfléchi par tout objet situé sur le trajet des rayons lumineux émis par l'émetteur) et d'un photodétecteur qui transforme la lumière collectée en signal électrique ; un capteur LIDAR permet ainsi de détecter la présence d'objets (par exemple le deuxième véhicule 11) situés dans le faisceau lumineux émis et de mesurer la distance entre le capteur et chaque objet détecté ; et/ou

- une ou plusieurs caméras (associées ou non à un capteur de profondeur) pour l'acquisition d'une ou plusieurs images de l'environnement autour du premier véhicule 10 se trouvant dans le champ de vision de la ou les caméras.

Les données obtenues de ce ou ces capteurs varient selon le type de capteur. Lorsqu'il s'agit d'un radar ou d'un LIDAR, les données correspondent par exemple à des données de distance entre des points de l'objet détecté et le capteur. Chaque objet détecté est ainsi représenté par un nuage de points (chaque point correspondant à un point de l'objet recevant le rayonnement émis par le capteur et réfléchissant au moins en partie ce rayonnement), le nuage de points représentant l'enveloppe (ou une partie de l'enveloppe) de l'objet détecté tel que vu par le capteur et in fine par le véhicule 10 embarquant le capteur. Lorsqu'il s'agit d'une caméra vidéo, les données correspondent à des données associées à chaque pixel de la ou les images acquises, par exemple des valeurs de niveaux de gris codés sur par exemple 8, 10, 12 ou plus de bits pour chaque canal couleur, par exemple RGB (de l'anglais « Red, Green, Blue » ou en français « Rouge, vert, bleu »). Ces données permettent par exemple de déterminer les positions successives prises par un objet se déplaçant dans l'environnement 1, par exemple le deuxième véhicule 11, et d'en déduire un ou plusieurs paramètres dynamiques de l'objet mobile tels que la vitesse et/ou l'accélération. Ces données permettent également de déterminer les lignes au sol pour par exemple participer à la détermination d'appartenance du deuxième véhicule 11 et du premier véhicule 10 à une même voie de circulation par exemple.

Les données acquises par le ou les capteurs embarqués alimentent par exemple un ou plusieurs systèmes d'aide à la conduite, dit ADAS (de l'anglais « Advanced Driver-Assistance System » ou en français « Système d'aide à la conduite avancé ») embarqués dans le premier véhicule 10. Un tel système ADAS est configuré pour assister, voire remplacer, le conducteur du premier véhicule 10 pour contrôler le premier véhicule 10 sur son parcours.

Selon un exemple, le premier véhicule 10 embarque un système ADAS correspondant à un système de régulation automatique de la vitesse, dit système ACC. Lorsque le système ACC est activé, le système ACC a pour objectif de réaliser une accélération de consigne, appelée $A_{consigne}(t)$, qui varie au cours du temps 't' et qui permet de maintenir ou atteindre une vitesse de régulation et/ou de maintenir une distance de sécurité déterminée vis-à-vis du deuxième véhicule 11 en amont du premier véhicule 10, c'est à dire d'un véhicule cible circulant devant le premier véhicule 10 dans le même sens de circulation sur la même voie de circulation. Les données obtenues du ou des capteurs embarqués dans le premier véhicule 10 permettent au système ACC du premier véhicule 10 d'établir une valeur cible d'accélération $A_{cible}(t)$ au cours du temps 't'. L'accélération cible $A_{cible}(t)$ devient une consigne d'accélération $A_{consigne}(t)$. Le système ACC ou un calculateur de ce système transmet par exemple les consignes d'accélérations $A_{consigne}(t)$ qu'il a déterminé au(x) calculateur(s) supervisant le fonctionnement d'un groupe motopropulseur du premier véhicule 10, notamment pour que ce(s) dernier(s) détermine(nt) les consignes de couple à générer par le groupe motopropulseur pour respecter les consignes d'accélération $A_{consigne}(t)$ et réguler la vitesse du premier véhicule 10.

Une valeur d'accélération cible est par exemple déterminée à un instant courant $t_0$ à partir d'un ensemble de données obtenues d'un ou plusieurs capteurs de détection d'objet embarqués dans le premier véhicule 10 et/ou de paramètres de consigne entrés par exemple par le conducteur ou déterminés à partir de données sur l'environnement du premier véhicule 10. La valeur d'accélération cible (exprimée en $m.s^{-2}$) est par exemple calculée à partir de :

- données représentatives du comportement dynamique du deuxième véhicule 11 (par exemple vitesse et/ou accélération), ces données étant par exemple obtenue à partir d'un ensemble de positions prises par le deuxième véhicule 11 sur un intervalle de temps précédant l'instant courant $t_0$ pour lequel est déterminée l'accélération cible. Les données sur les positions prises par le deuxième véhicule 11 sont avantageusement déterminées à partir des données reçues du ou des capteurs de détection d'objet embarqués dans le premier véhicule 10 ;
- données représentatives du comportement dynamique du premier véhicule 10 (par exemple vitesse, accélération, distance vis-à-vis du deuxième véhicule 11), ces données étant obtenues de capteurs embarqués dans le premier véhicule 10, la distance étant par exemple obtenue à partir des données reçues du ou des capteurs de détection d'objet ; et/ou
- paramètres de consignes fournis au système ACC, tels que par exemple une vitesse cible, une distance ou un temps inter-véhicule (DIV ou TIV) cible, ces paramètres étant enregistrés en mémoire, déterminés par analyse de l'environnement (par exemple la vitesse cible est déterminée par lecture des panneaux de limitation de vitesse ou à partir de données reçus d'un système de navigation) ou entrés par un utilisateur via une interface Homme-Machine, dite IHM.

Un processus de contrôle du système ACC du premier véhicule 10 ayant pour véhicule cible le deuxième véhicule 11 est avantageusement mis en œuvre par le premier véhicule 10, c'est-à-dire par un calculateur ou une combinaison de calculateurs du système embarqué du premier véhicule 10, par exemple par le ou les calculateurs en charge de contrôler le système ACC.

Dans une première opération, le premier véhicule 10 détermine des premières données représentatives de décélération du deuxième véhicule et des deuxièmes données représentatives de vitesse du deuxième véhicule.

Les premières données sont par exemple représentatives d'une valeur de décélération courante du deuxième véhicule 11 à un instant courant 't'. Selon une variante, les premières données sont représentatives de plusieurs valeurs de décélération du deuxième véhicule 11 déterminées successivement d'un point de vue temporel, par exemple à intervalle régulier (par exemple toutes les 10, 20, 50, 100 ou 500 ms).

Les deuxièmes données sont par exemple représentatives d'une valeur de vitesse courante du deuxième véhicule 11 à l'instant courant 't'. Selon une variante, les premières données sont représentatives de plusieurs valeurs de vitesse du deuxième véhicule 11 déterminées successivement d'un point de vue temporel, par exemple à intervalle régulier (par exemple toutes les 10, 20, 50, 100 ou 500 ms).

Selon une variante, les premières données et les deuxièmes données sont émises par le deuxième véhicule 11 et reçues par le premier véhicule 10 via une connexion sans fil, par exemple selon un mode de communication de type véhicule vers tout, dit V2X (de l'anglais « vehicle-to-everything ») ou selon un mode de communication de type véhicule vers véhicule, dit V2V (de l'anglais « vehicle-to-vehicle »). Les données sont par exemple reçues par une unité de contrôle télématique, dite TCU (de l'anglais « Telematic Control Unit ») du système embarqué du premier véhicule 10. La TCU transmet les données reçues au calculateur en charge du processus par l'intermédiaire d'un ou plusieurs bus informatiques, par exemple un bus de communication de type bus de données CAN (de l'anglais « Controller Area Network » ou en français « Réseau de contrôleurs »), CAN FD (de l'anglais « Controller Area Network Flexible Data-Rate » ou en français « Réseau de contrôleurs à débit de données flexible »), FlexRay (selon la norme ISO 17458) ou Ethernet (selon la norme ISO/IEC 802-3).

Dans une deuxième opération, des troisièmes données représentatives d'un paramètre représentatif d'une durée sont déterminées selon une fonction déterminée des premières données.

La figure 2 illustre un exemple d'une telle fonction entre le paramètre représentatif de durée (noté $t_D$ en ordonné du diagramme 2) et la décélération du deuxième véhicule 11 (noté $D_{11}$ en abscisse du diagramme 2).

Selon l'exemple de la figure 2, la paramètre $t_D$ est compris entre 0 et une valeur maximale notée $t_{d,max}$. La valeur maximale de durée $t_{D,max}$ est par exemple égale à 500 ms. Selon d'autres exemples, la valeur maximale de durée $t_{D,max}$ est égale à 250, 400, 600 ou 750 ms.

La fonction illustrée en figure 2 montre la relation entre le paramètre $t_D$ et la décélération $D_{11}$ du deuxième véhicule 11. La décélération d'un véhicule correspond à une grandeur exprimée en $m.s^{-2}$ dont les valeurs sont négatives, les valeurs positives correspondant à une accélération. Dit autrement, la décélération est la partie négative de l'accélération d'un véhicule.

Dans ce qui suit, la décélération dite maximale $D_{max}$ est supérieure à une décélération dite minimale $D_{min}$ en ce que la valeur absolue de la décélération maximale est supérieure à la décélération minimale.

Ainsi, si $D_{min} > D_{max}$ lorsque ces grandeurs sont exprimées dans l'espace des nombre réels, la relation entre les valeurs absolues de ces grandeurs correspond à :

[Math 1]

$$|D_{min}| \; < \; |D_{max}|$$

La fonction entre le paramètre $t_D$ et la décélération $D_{11}$ selon l'exemple de la figure 2 comprend :

- une première partie 21 selon laquelle $t_D$ est constant et vaut 0 pour une décélération comprise entre 0 et une valeur minimale (notée $D_{min}$), par exemple égale à $-2 \, m.s^{-2}$, ou selon d'autres exemples, égale à -1, -1.5, -2.5 ou $-3 \, m.s^{-2}$ ;
- une deuxième partie 22 selon laquelle $t_D$ croit au fur et à mesure que la décélération augmente, $t_D$ croissant selon une fonction linéaire pour passer du maximum égal à 0 à une valeur maximale de td notée $t_{d,max}$ et par exemple égale à 500 ms pour une décélération comprise entre $D_{min}$ et $D_{max}$, avec $D_{max}$ par exemple égale à $-5 \, m.s^{-2}$, ou selon d'autres exemples, égale à -4, -4.5, -5.5 ou $-6 \, m.s^{-2}$ ; et
- une troisième partie 23 selon laquelle $t_D$ est constant et vaut $t_{d,max}$ pour toute valeur de décélération supérieure ou égale à $D_{max}$.

Ainsi et de manière globale, plus la décélération augmente (en valeur absolue), plus le paramètre $t_d$ augmente avec un minimum et un maximum.

Dans une troisième opération, des quatrièmes données représentatives de vitesse ajustée du deuxième véhicule sont déterminées en fonction des premières données et des deuxièmes données (obtenues à la première opération) ainsi que des troisièmes données obtenues à la deuxième opération.

Par exemple, une vitesse ajustée du deuxième véhicule 11 à un instant 't' est obtenue à partir de la décélération et de la vitesse du deuxième véhicule 11 à cet instant 't' et à partir du paramètre de durée $t_D$ lui-même obtenu en fonction de la valeur de décélération à cet instant 't'. Si 't' est l'instant courant, la valeur ajustée est dite valeur ajustée courante, la décélération à cet instant 't' est dite accélération courante, la vitesse à l'instant 't' est dite vitesse courante.

Selon un exemple particulier, une vitesse ajustée à l'instant 't' (correspondant par exemple à l'instant courant) du deuxième véhicule 11 correspond au maximum entre un paramètre déterminé correspondant à une première vitesse déterminée (par exemple enregistrée en mémoire du calculateur du premier véhicule 10 mettant en œuvre le processus) et une deuxième vitesse correspondant à une somme d'une vitesse du deuxième véhicule 11 à l'instant 't' et d'un produit d'une décélération du deuxième véhicule 11 à l'instant 't' par la durée $t_D$ obtenue en fonction de la décélération à l'instant 't'.

Une valeur de vitesse ajustée est ainsi par exemple obtenue à partir de l'équation suivante :

$$V_{ajustée} = \max(V_{cible\_C},\ V_{cible} + D_{cible} * t_D(D_{cible}))$$

Avec $V_{ajustée}$ la valeur de vitesse ajustée du deuxième véhicule 11, $V_{cible\_c}$ la valeur de première vitesse déterminée correspondant à un paramètre par exemple stocké en mémoire, $V_{cible}$ la vitesse du deuxième véhicule à l'instant 't', $D_{cible}$ la décélération du deuxième véhicule à l'instant 't' et $t_D(D_{cible})$ la durée fonction de la décérélation du deuxième véhicule à l'instant 't'.

La paramètre $V_{cible-c}$ correspondant à la première vitesse déterminée est par exemple égal à 1 m/s. Selon d'autres exemples, ce paramètre est égal à 0.5, 0.8, 1.2 ou 1.5 m/s.

Dans une quatrième opération, le système ACC du premier véhicule 10 est contrôlé en fonction des quatrièmes données obtenues à la troisième opération.

Le contrôle du système ACC comprend avantageusement un ajustement d'une valeur ou d'un paramètre de consigne du système en fonction de la vitesse ajustée du deuxième véhicule. Par exemple, le temps inter-véhicules fourni en consigne ($TIV_{consigne}$) ou comme cible ($TIV_{cible}$) est ajusté en fonction de la vitesse ajustée $V_{ajustée}$.

Le contrôle du système ACC du premier véhicule 10 en fonction de la vitesse ajustée $V_{ajustée}$ du deuxième véhicule 11 permet de commencer la phase de décélération du premier véhicule 10 en avance par rapport à une phase de décélération du premier véhicule 10 selon un mode de fonctionnement connu du système ACC.

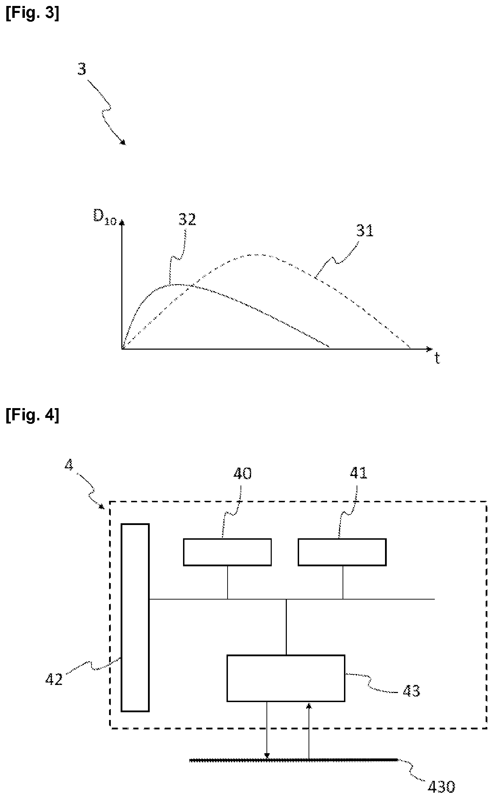

Un tel résultat est montré par la figure 3 qui illustre un diagramme 3 comprenant deux courbes 31, 32 de décélération $D_{10}$ du premier véhicule 10 en fonction du temps 't'.

La figure 3 illustre une première courbe 31, en traits pointillés, correspondant à l'évolution de la décélération du premier véhicule 10 en fonction du temps, correspondant à un contrôle de la décélération par un système ACC de l'art antérieur.

La figure 3 illustre une deuxième courbe 32, en trait continu, correspondant à l'évolution de la décélération du premier véhicule 10 en fonction du temps, correspondant à un contrôle de la décélération par un système ACC en fonction de la vitesse ajustée du deuxième véhicule 11 obtenue à la troisième opération, cette deuxième courbe 32 correspondant à un contrôle d'un système ACC selon la présente invention.

Comme illustré sur la figure 3, la décélération selon la présente invention illustrée par la deuxième courbe 32 augmente plus rapidement et plus tôt temporellement que la première courbe 31.

Ainsi, selon la présente invention, plus la décélération $D_{11}$ du deuxième véhicule 11 est importante, plus le paramètre de durée $t_D$ est important (en partant de 0 pour toute valeur de décélération du deuxième véhicule inférieure ou égale à une valeur minimale de décélération Dmin jusqu'à atteindre un maximum $t_{D,max}$ pour une valeur maximale de décélération $D_{max}$ et toute valeur de décélération du deuxième véhicule 11 supérieure à $D_{max}$).

En conséquence, la vitesse ajustée du deuxième véhicule 11 est diminuée par rapport à la vitesse réelle. En effet, plus la décélération du deuxième véhicule est importante, plus le paramètre $t_D$ est élevé et plus le produit est des deux est élevé (le produit donnant une valeur négative puisque la décélération est exprimée par une valeur d'accélération inférieure ou égale à 0). Ce produit est alors soustrait à la vitesse déterminée du deuxième véhicule à l'instant 't' et le résultat est comparée à la première valeur de vitesse $V_{cible\_C}$ pour sélectionner le maximum des deux.

En diminuant la vitesse du deuxième véhicule par rapport à la vitesse déterminée, la régulation de vitesse du premier véhicule est telle que la décélération du premier véhicule 10 sera plus importante pour maintenir le TIV ou le DIV de consigne, jusqu'à l'arrêt du premier véhicule 10 si nécessaire.

Le système ACC du premier véhicule 10 est ainsi plus réactif en cas de freinage fort du deuxième véhicule 11. Plus le freinage du deuxième véhicule 11 est fort ou élevé, plus la décélération du premier véhicule 10 est élevé (jusqu'à une limite) pour mieux anticiper la décélération du deuxième véhicule 11.

La vitesse ajustée calculée pour le deuxième véhicule 11 par le premier véhicule 10 permet de moduler la consigne d'un régulateur proportionnel dérivé (distance, vitesse) ou d'un régulateur proportionnel dérivé dérivé 2 (distance, vitesse, accélération) mis en œuvre par le système ACC.

La figure 4 illustre schématiquement un dispositif 4 configuré pour contrôler le système ACC d'un véhicule, par exemple du premier véhicule 10, selon un exemple de réalisation particulier et non limitatif de la présente invention. Le dispositif 4 correspond par exemple à un dispositif embarqué dans le premier véhicule 10, par exemple un calculateur.

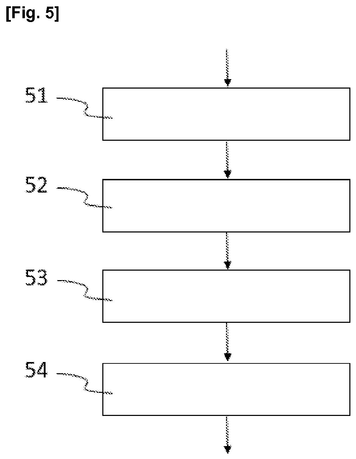

Le dispositif 4 est par exemple configuré pour la mise en œuvre des opérations décrites en regard des figures 1 à 3 et/ou des étapes du procédé décrit en regard de la figure 5. Des exemples d'un tel dispositif 4 comprennent, sans y être limités, un équipement électronique embarqué tel qu'un ordinateur de bord d'un véhicule, un calculateur électronique tel qu'une UCE (« Unité de Commande Electronique »), un téléphone intelligent, une tablette, un ordinateur portable. Les éléments du dispositif 4, individuellement ou en combinaison, peuvent être intégrés dans un unique circuit intégré, dans plusieurs circuits intégrés, et/ou dans des composants discrets. Le dispositif 4 peut être réalisé sous la forme de circuits électroniques ou de modules logiciels (ou informatiques) ou encore d'une combinaison de circuits électroniques et de modules logiciels.

Le dispositif 4 comprend un (ou plusieurs) processeur(s) 40 configurés pour exécuter des instructions pour la réalisation des étapes du procédé et/ou pour l'exécution des instructions du ou des logiciels embarqués dans le dispositif 4. Le processeur 40 peut inclure de la mémoire intégrée, une interface d'entrée/sortie, et différents circuits connus de l'homme du métier. Le dispositif 4 comprend en outre au moins une mémoire 41 correspondant par exemple à une mémoire volatile et/ou non volatile et/ou comprend un dispositif de stockage mémoire qui peut comprendre de la mémoire volatile et/ou non volatile, telle que EEPROM, ROM, PROM, RAM, DRAM, SRAM, flash, disque magnétique ou optique.

Le code informatique du ou des logiciels embarqués comprenant les instructions à charger et exécuter par le processeur est par exemple stocké sur la mémoire 41.

Selon différents exemples de réalisation particuliers et non limitatifs, le dispositif 4 est couplé en communication avec d'autres dispositifs ou systèmes similaires (par exemple d'autres calculateurs) et/ou avec des dispositifs de communication, par exemple une TCU (de l'anglais « Telematic Control Unit » ou en français « Unité de Contrôle Télématique »), par exemple par l'intermédiaire d'un bus de communication ou au travers de ports d'entrée / sortie dédiés.

Selon un exemple de réalisation particulier et non limitatif, le dispositif 4 comprend un bloc 42 d'éléments d'interface pour communiquer avec des dispositifs externes. Les éléments d'interface du bloc 42 comprennent une ou plusieurs des interfaces suivantes :

- interface radiofréquence RF, par exemple de type Wi-Fi® (selon IEEE 802.11), par exemple dans les bandes de fréquence à 2,4 ou 5 GHz, ou de type Bluetooth® (selon IEEE 802.15.1), dans la bande de fréquence à 2,4 GHz, ou de type Sigfox utilisant une technologie radio UBN (de l'anglais Ultra Narrow Band, en français bande ultra étroite), ou LoRa dans la bande de fréquence 868 MHz, LTE (de l'anglais « Long-Term Evolution » ou en français « Evolution à long terme »), LTE-Advanced (ou en français LTE-avancé) ;
- interface USB (de l'anglais « Universal Serial Bus » ou « Bus Universel en Série » en français) ;
- interface HDMI (de l'anglais « High Definition Multimedia Interface », ou « Interface Multimedia Haute Definition » en français) ;
- interface LIN (de l'anglais « Local Interconnect Network », ou en français « Réseau interconnecté local »).

Des données sont par exemples chargées vers le dispositif 4 via l'interface du bloc 42 en utilisant un réseau Wi-Fi® tel que selon IEEE 802.11, un réseau ITS G5 basé sur IEEE 802.11p ou un réseau mobile tel qu'un réseau 4G (ou 5G) basé sur la norme LTE (de l'anglais Long Term Evolution) définie par le consortium 3GPP notamment un réseau LTE-V2X.

Selon un autre exemple de réalisation particulier et non limitatif, le dispositif 4 comprend une interface de communication 43 qui permet d'établir une communication avec d'autres dispositifs (tels que d'autres calculateurs du système embarqué) via un canal de communication 430. L'interface de communication 43 correspond par exemple à un transmetteur configuré pour transmettre et recevoir des informations et/ou des données via le canal de communication 430. L'interface de communication 43 correspond par exemple à un réseau filaire de type CAN (de l'anglais « Controller Area Network » ou en français « Réseau de contrôleurs »), CAN FD (de l'anglais « Controller Area Network Flexible Data-Rate » ou en français « Réseau de contrôleurs à débit de données flexible »), FlexRay (standardisé par la norme ISO 17458) ou Ethernet (standardisé par la norme ISO/IEC 802-3).

Selon un exemple de réalisation particulier et non limitatif, le dispositif 4 peut fournir des signaux de sortie à un ou plusieurs dispositifs externes, tels qu'un écran d'affichage, tactile ou non, un ou des haut-parleurs et/ou d'autres périphériques (système de projection) via des interfaces de sortie respectives. Selon une variante, l'un ou l'autre des dispositifs externes est intégré au dispositif 4.

[Fig. 5] illustre un organigramme des différentes étapes d'un procédé de contrôle d'un système ACC d'un véhicule, par exemple du premier véhicule 10, selon un exemple de réalisation particulier et non limitatif de la présente invention. Le procédé est par exemple mis en œuvre par un dispositif embarqué dans le premier véhicule 10 ou par le dispositif 4 de la figure 4.

Dans une première étape 51, des premières données représentatives de décélération du deuxième véhicule et des deuxièmes données représentatives de vitesse du deuxième véhicule sont déterminées.

Dans une deuxième étape 52, des troisièmes données représentatives d'une durée sont déterminées selon une fonction déterminée des premières données.

Dans une troisième étape 53, des quatrièmes données représentatives de vitesse ajustée du deuxième véhicule sont déterminées en fonction des premières données, des deuxièmes données et des troisièmes données.

Dans une quatrième étape 54, le système ACC est contrôlé en fonction des quatrièmes données.

Selon une variante, les variantes et exemples des opérations décrits en relation avec la figure 1, 2 et/ou 3 s'appliquent aux étapes du procédé de la figure 5.

La présente invention concerne également un système de régulation adaptative de vitesse pour véhicule comprenant le dispositif 4 de la figure 4.

La présente invention concerne également un véhicule, par exemple automobile ou plus généralement un véhicule autonome à moteur terrestre, comprenant le dispositif 4 de la figure 4 ou le système de régulation adaptative de vitesse pour véhicule ci-dessus.

## Revendications

1. Procédé de contrôle d'un système de régulation adaptative de vitesse, dit système ACC, d'un premier véhicule (10) suivant un deuxième véhicule (11) correspondant à un véhicule cible dudit système ACC, ledit procédé comprenant les étapes suivantes :

   - détermination (51) de premières données représentatives de décélération dudit deuxième véhicule (11) et de deuxièmes données représentatives de vitesse dudit deuxième véhicule (11) ;
   - détermination (52) de troisièmes données représentatives d'une durée selon une fonction déterminée desdites premières données ;
   - détermination (53) de quatrièmes données représentatives de vitesse ajustée dudit deuxième véhicule (11) en fonction desdites premières données, desdites deuxièmes données et desdites troisièmes données ;
   - contrôle (54) dudit système ACC en fonction desdites quatrièmes données, **caractérisé en ce que** les premières données comprennent une valeur de décélération courante dudit deuxième véhicule, les deuxièmes données comprennent une valeur de vitesse courante dudit deuxième véhicule, les quatrièmes données comprennent une valeur de vitesse ajustée courante dudit deuxième véhicule, la vitesse ajustée courante dudit deuxième véhicule (11) correspond au maximum entre une première vitesse déterminée et une deuxième vitesse correspondant à une somme de la vitesse courante dudit deuxième véhicule (11) et d'un produit de la décélération courante dudit deuxième véhicule (11) par ladite durée.

2. Procédé selon la revendication 1, pour lequel ladite première vitesse déterminée est égale à 1 m/s.

3. Procédé selon l'une des revendications 1 à 2, pour lequel ladite durée est égale à 0 pour toute valeur de décélération dudit deuxième véhicule comprise entre 0 et une valeur dite minimale de décélération, ladite durée est suivant une fonction croissante de la décélération dudit deuxième véhicule lorsque ladite décélération est comprise entre ladite valeur minimale et une valeur dite maximale de décélération et ladite durée est égale à une valeur maximale de durée pour toute valeur de décélération supérieure à ladite valeur maximale de décélération.

4. Procédé selon la revendication 3, pour lequel ladite valeur maximale de durée déterminée est égale à 500 ms, ladite valeur minimale de décélération est égale à -2 m/s$^2$ et ladite valeur maximale de décélération est égale à -5 m/s$^2$.

5. Procédé selon l'une des revendications 1 à 4, pour lequel ledit contrôle dudit système ACC comprend un ajustement d'une valeur de temps inter-véhicules de consigne en fonction de ladite vitesse ajustée dudit deuxième véhicule (11).

6. Programme d'ordinateur comportant des instructions, qui conduisent celui-ci à mettre en œuvre le procédé selon l'une quelconque des revendications précédentes, lorsque ces instructions sont exécutées par un processeur.

7. Support d'enregistrement lisible par un ordinateur sur lequel est enregistré un programme d'ordinateur selon la revendication 6.

8. Dispositif (4) de contrôle d'un système de régulation adaptative de vitesse de véhicule, ledit dispositif (4) comprenant une mémoire (41) associée à au moins un processeur (40) configuré pour la mise en œuvre des étapes du procédé selon l'une quelconque des revendications 1 à 5.

9. Véhicule (10) comprenant le dispositif (4) selon la revendication 8.

**Patentansprüche**

1. Verfahren zum Steuern eines adaptiven Geschwindigkeitsregelsystems, ACC-System genannt, eines ersten Fahrzeugs (10), das einem zweiten Fahrzeug (11) folgt, das einem Zielfahrzeug des ACC-Systems entspricht, wobei das Verfahren die folgenden Schritte umfasst:

   - Ermitteln (51) erster Daten, die die Verzögerung des zweiten Fahrzeugs (11) darstellen, und zweiter Daten, die die Geschwindigkeit des zweiten Fahrzeugs (11) darstellen;
   - Ermitteln (52) dritter Daten, die eine Dauer gemäß einer bestimmten Funktion der ersten Daten darstellen;
   - Ermitteln (53) vierter Daten, die die angepasste Geschwindigkeit des zweiten Fahrzeugs (11) darstellen, als Funktion der ersten Daten, der zweiten Daten und der dritten Daten;
   - Steuern (54) des ACC-Systems als Funktion der vierten Daten.

   **dadurch gekennzeichnet, dass** die ersten Daten einen aktuellen Verzögerungswert des zweiten Fahrzeugs umfassen, die zweiten Daten einen aktuellen Geschwindigkeitswert des zweiten Fahrzeugs umfassen, die vierten Daten einen aktuellen angepassten Geschwindigkeitswert des zweiten Fahrzeugs umfassen, die aktuelle angepasste Geschwindigkeit des zweiten Fahrzeugs (11) dem Maximum zwischen einer ersten bestimmten Geschwindigkeit und einer zweiten Geschwindigkeit entspricht, die einer Summe aus der aktuellen Geschwindigkeit des zweiten Fahrzeugs (11) und einem Produkt aus der aktuellen Verzögerung des zweiten Fahrzeugs (11) und der Dauer entspricht.

2. Verfahren nach Anspruch 1, bei dem die erste ermittelte Geschwindigkeit gleich 1 m/s ist.

3. Verfahren nach einem der Ansprüche 1 bis 2, bei dem die Dauer für jeden Verzögerungswert des zweiten Fahrzeugs zwischen 0 und einem sogenannten minimalen Verzögerungswert gleich 0 ist, die Dauer einer zunehmenden Funktion der Verzögerung des zweiten Fahrzeugs entspricht, wenn die Verzögerung zwischen dem minimalen Wert und einem sogenannten maximalen Verzögerungswert liegt, und die Dauer für jeden Verzögerungswert, der größer als der maximale Verzögerungswert ist, einem maximalen Dauerwert entspricht .

4. Verfahren nach Anspruch 3, bei dem der Maximalwert der ermittelten Dauer 500 ms, der minimale Verzögerungswert -2 m/s$^2$ und der maximale Verzögerungswert -5 m/s$^2$ beträgt.

5. Verfahren nach einem der Ansprüche 1 bis 4, bei dem die Steuerung des ACC-Systems eine Anpassung eines festgelegten Fahrzeugabstandswerts als Funktion der angepassten Geschwindigkeit des zweiten Fahrzeugs (11) umfasst.

6. Computerprogramm mit Anweisungen, die es veranlassen, das Verfahren nach einem der vorhergehenden Ansprüche auszuführen, wenn diese Anweisungen von einem Prozessor ausgeführt werden.

7. Ein computerlesbares Aufzeichnungsmedium, auf dem ein Computerprogramm gemäß Anspruch 6 aufgezeichnet ist.

8. Vorrichtung (4) zur Steuerung eines adaptiven Fahrzeuggeschwindigkeitsregelsystems, wobei die Vorrichtung (4) einen Speicher (41) umfasst, der mit mindestens einem Prozessor (40) verbunden ist, der zur Durchführung der Schritte des Verfahrens nach einem der Ansprüche 1 bis 5 konfiguriert ist.

9. Fahrzeug (10) umfassend die Vorrichtung (4) nach Anspruch 8.

**Claims**

1. Method for controlling an adaptive speed control system, called ACC system, of a first vehicle (10) following a second vehicle (11) corresponding to a target vehicle of said ACC system, said method comprising the following steps:

- determining (51) first data representative of deceleration of said second vehicle (11) and second data representative of speed of said second vehicle (11);
- determining (52) third data representative of a duration according to a determined function of said first data;
- determining (53) fourth data representative of adjusted speed of said second vehicle (11) as a function of said first data, said second data and said third data;
- controlling (54) said ACC system as a function of said fourth data,

**characterized in that** the first data comprises a current deceleration value of said second vehicle, the second data comprises a current speed value of said second vehicle, the fourth data comprises a current adjusted speed value of said second vehicle, the current adjusted speed of said second vehicle (11) corresponds to the maximum between a first determined speed and a second speed corresponding to a sum of the current speed of said second vehicle (11) and a product of the current deceleration of said second vehicle (11) by said duration.

2. Method according to claim 1, for which said first determined speed is equal to 1 m/s.

3. Method according to one of claims 1 to 2, for which said duration is equal to 0 for any deceleration value of said second vehicle between 0 and a so-called minimum deceleration value, said duration is according to an increasing function of the deceleration of said second vehicle when said deceleration is between said minimum value and a so-called maximum deceleration value and said duration is equal to a maximum duration value for any deceleration value greater than said maximum deceleration value.

4. Method according to claim 3, for which said maximum value of determined duration is equal to 500 ms, said minimum deceleration value is equal to -2 m/s$^2$ and said maximum deceleration value is equal to -5 m/s$^2$.

5. Method according to one of claims 1 to 4, for which said control of said ACC system comprises an adjustment of a set inter-vehicle time value as a function of said adjusted speed of said second vehicle (11).

6. Computer program comprising instructions, which cause it to implement the method according to any one of the preceding claims, when these instructions are executed by a processor.

7. A computer-readable recording medium on which a computer program according to claim 6 is recorded.

8. Device (4) for controlling an adaptive vehicle speed regulation system, said device (4) comprising a memory (41) associated with at least one processor (40) configured for implementing the steps of the method according to any one of claims 1 to 5.

9. Vehicle (10) comprising the device (4) according to claim 8.

[Fig. 1]

[Fig. 2]

[Fig. 3]

[Fig. 4]

[Fig. 5]

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2019061756 A1